# EUROPÄISCHE PATENTSCHRIFT

(11) **EP 4 588 647 B1**
(45) Veröffentlichungstag und Bekanntmachung des Hinweises auf die Patenterteilung: **25.03.2026**
(21) Anmeldenummer: 25152308.0
(22) Anmeldetag: 16.01.2025
(51) Int. Cl.: B29C 65/52, B29C 65/78, B29C 65/00, B29D 99/00, F16J 15/10, F16J 15/328, B29L 31/26

(54) **VORRICHTUNG UND VERFAHREN ZUR HERSTELLUNG EINES RINGES**
APPARATUS AND METHOD FOR MANUFACTURING A RING
DISPOSITIF ET PROCÉDÉ DE FABRICATION D'UN ANNEAU

(30) Priorität: 18.01.2024 AT 500292024
(43) Veröffentlichungstag der Anmeldung: 23.07.2025
(73) Patentinhaber: mexbert gmbh, 2831 Warth (AT)
(72) Erfinder: Ungerhofer, Engelbert, 2831 Warth (AT); Seibald, Daniel, 2831 Warth (AT); Koglbauer, Bernhard, 2831 Warth (AT)
(74) Vertreter: Haas, Stephan

(56) Entgegenhaltungen:
- DE-A1- 102016 117 544

## Beschreibung

Die Erfindung betrifft eine Vorrichtung zur Herstellung eines Ringes aus einem länglichen Streifen, umfassend einen ersten Greifer, der ausgebildet ist, um den länglichen Streifen zu ergreifen und zu bewegen, sowie eine Klebstoffzuführvorrichtung.

Die Erfindung betrifft weiters ein Verfahren zur Herstellung eines Ringes aus einem länglichen Streifen.

Geschlossene Ringe werden in vielen Bereichen benötigt, insbesondere in der Form von Dichtungsringen. Ringe, insbesondere Dichtungsringe, können auf unterschiedliche Arten hergestellt werden, wobei das jeweilige Herstellungsverfahren auch vom Material des Ringes abhängt.

Neben Gussverfahren ist es insbesondere bei Ringen aus einem elastischen Material üblich, aus einem Endlosmaterial einzelne Stücke abzulängen und anschließend die Enden des entstehenden länglichen Streifens (Schnur) miteinander zu verbinden, sodass ein geschlossener Ring entsteht. Zur Verbindung der beiden Enden können neben Schweißverfahren, bei welchen die Enden im erhitzten Zustand miteinander verbunden werden, Klebeverfahren genutzt werden. Hierbei wird Klebstoff auf ein Ende oder beide Enden des Streifens aufgebracht und anschließend die beiden Enden, insbesondere unter Druck, miteinander in Kontakt gebracht, wodurch ein Ring entsteht.

Aus der DE 102016117544 A1 ist bspw. ein Verfahren bekannt, bei welchem aus einem Endlosmaterial zunächst längliche Streifen abgelängt werden. Anschließend werden die Enden des jeweiligen länglichen Streifens mithilfe von Greifern gegriffen und verlagert. Zumindest ein Ende wird in eine Position gebracht, in der Klebstoff auf das Ende aufgetragen wird, bevor die beiden Enden des länglichen Streifens zusammengeführt werden, sodass ein Dichtungsring gebildet ist.

Bei diesem Verfahren besteht allerdings der Nachteil, dass die Klebstoffaufbringung auf das Ende bzw. die Enden nicht ausreichend genau ist, sodass oftmals entweder zu viel Klebstoff aufgetragen wird und der Klebstoff beim Verbinden der Enden aus der Verbindungsstelle hervorquillt oder zu wenig Klebstoff aufgetragen wird, sodass die Verbindung nicht ausreichend gut hält.

Es ist daher eine Aufgabe der Erfindung, eine Vorrichtung bereitzustellen, die es ermöglicht, eine stabile und saubere Verbindung zwischen den Enden eines Ringes bereitzustellen. Insbesondere soll bevorzugt eine Vorrichtung geschaffen werden, die eine einfache Herstellung von elastischen Ringen ermöglicht.

Erfindungsgemäß ist eine Vorrichtung der eingangs genannten Art vorgesehen, bei der die Klebstoffzuführvorrichtung ausgebildet ist, um eine Klebstoffmenge auf eine Transferfläche aufzubringen, und der erste Greifer ausgebildet ist, um ein erstes Ende des länglichen Streifens in die Klebstoffmenge zumindest teilweise einzutauchen.

Diese Vorrichtung erlaubt es, dass ein Ende des Streifens in eine auf einer Transferfläche angeordnete definierte Klebstoffmenge eintaucht, um den Klebstoff auf das Ende aufzubringen. Dies bewirkt, dass der Klebstoff genauer und dosierter auf das Ende aufgebracht wird als bei bekannten Verfahren, bei denen der Klebstoff direkt aus einer Zuführeinrichtung auf das Ende des Streifens aufgebracht wird. Dadurch wird die Zuverlässigkeit des mithilfe der Vorrichtung durchgeführten Herstellungsverfahrens deutlich verbessert und der Ausschuss erheblich reduziert.

Die Transferfläche ist bevorzugt im Wesentlichen waagrecht angeordnet, kann aber alternativ auch im Wesentlichen senkrecht oder in einer anderen räumlichen Position angeordnet sein.

Das Eintauchen kann entweder durch ein Führen des Endes des Streifens in Richtung der Transferfläche und/oder ein Führen der Transferfläche in Richtung des Streifenendes erfolgen. Auch eine Kombination der beiden Bewegungen ist möglich. Bevorzugt ist der erste Greifer ausgebildet, um das Ende des Streifens in Richtung zur Transferfläche hin zu führen und wieder weg zu führen. Das Ende des Streifens wird hierbei mit einem definierten Druck und bis zu einem gewissen Abstand von der Transferfläche in eine Klebstoffmenge eingetaucht, wodurch der Klebstoff (teilweise) auf das Ende des Streifens übertragen wird.

Die Klebstoffzuführvorrichtung ist bevorzugt ortsfest angeordnet, sodass die Klebstoffmenge jeweils im Wesentlichen an die gleiche Position aufgebracht wird. Dies erlaubt einen einfachen Aufbau der Klebstoffzuführvorrichtung. Alternativ kann die Klebstoffzuführvorrichtung auch bewegbar angeordnet sein, sodass die Flexibilität bei der Aufbringung weiter erhöht ist.

Um zu vermeiden, dass der Klebstoff jeweils auf die gleiche Transferfläche aufgebracht wird, ist bevorzugt ein bewegbares Band vorgesehen, welches die Transferfläche umfasst. Dies ermöglicht eine bessere Automatisierung des Verfahrens, indem es möglich ist, nach dem Aufbringen der Klebstoffmenge auf die Transferfläche und dem Eintauchen des Endes des Streifens in die Klebstoffmenge das Band zu bewegen. Durch das Bewegen des Bandes kommt ein anderer Bereich des Bandes in den Bereich der Klebstoffzuführvorrichtung und die nächste Klebstoffmenge für den nächsten Ring wird auf diesen anderen Bereich, der als Transferfläche dient, aufgetragen. Hierdurch kann während des Herstellungsverfahrens jede durch die Klebstoffzuführvorrichtung ausgegebene Klebstoffmenge auf eine eigene Transferfläche aufgebracht werden, ohne dass die einzelnen Klebstoffmengen einander berühren. Die Überreste der Klebstoffmengen, in die jeweils ein Ende eines Steifens eingetaucht wurde, werden durch die Bewegung des Bandes abtransportiert, also von der Klebstoffzuführvorrichtung wegbewegt. Diese Anordnung erlaubt eine genaue und einfache Dosierung der Klebstoffmenge.

Die Transferfläche ist bevorzugt derart angeordnet, dass sie wahlweise bewegt, bspw. verschwenkt oder translatorisch verlagert werden kann. Dies ermöglicht eine Bewegung der Transferfläche in Richtung eines Endes des Streifens bzw. in eine entsprechende Position, um das Ende in eine auf der Transferfläche angeordnete Klebstoffmenge einzutauchen. Weiters ist es hierbei möglich, die Transferfläche zwischen einer Position, in der Klebstoff auf die Transferfläche aufgebracht wird, und einer Position, in der das Ende des Streifens in den Klebstoff auf der Transferfläche eingetaucht wird, zu bewegen.

Das bewegbare Band ist bspw. eine dünne Folie, die breiter als die durch die aufgebrachte Klebstoffmenge benötigte Breite ist. Bevorzugt besteht das Band aus einer PP- oder PE- Folie, wobei das Band, insbesondere die Folie, bevorzugt mit einer (einseitigen) Anti-Haft-Beschichtung, bspw. mit einer Silikonbeschichtung, versehen ist. Die Beschichtung ist auf der der Klebstoffzuführvorrichtung zugewandten Seite des Bandes angeordnet und verhindert bzw. reduziert die Haftung der aufgebrachten Klebstoffmenge auf dem Band. Das Band bzw. die Transferfläche kann bspw. eine Dicke von ca. 0,1 mm haben.

Alternativ umfasst die Transferfläche bspw. eine Platte. Die Platte besteht hierbei bevorzugt aus einem Metall oder einem Kunststoff. Bevorzugt ist die Platte bzw. die Transferfläche auf der der Klebstoffzuführvorrichtung zugewandten Seite der Platte bzw. der Transferfläche mit einer Anti-Haft-Beschichtung beschichtet, bspw. mit einer Silikonbeschichtung, wodurch die Haftung der aufgebrachten Klebstoffmenge auf der Transferfläche verhindert bzw. reduziert wird.

Das bewegbare Band kann bspw. von einem, bevorzugt gebremsten, Abroller zu einem, bevorzugt angetriebenen, Aufroller geführt werden. Auf der Strecke zwischen dem Abroller und dem Aufroller dient das Band in einem Abschnitt als Transferfläche. Bspw. sind zwei Umlenkrollen vorgesehen, die derart angeordnet sind, dass das Band zwischen den Umlenkrollen im Wesentlichen waagrecht geführt wird. In diesem Bereich zwischen den Umlenkrollen kann Klebstoff aufgebracht werden und anschließend das erste Ende eines Streifens in die Klebstoffmenge eingetaucht werden. Um die Anwesenheit des Bandes sicherzustellen, kann bspw. eine Bandüberwachung vorgesehen sein, die mit einer Steuerungsvorrichtung verbunden ist, die ausgebildet ist, um in Abhängigkeit von den durch die Bandüberwachung übermittelten Signalen den Aufroller bzw. den Abroller und/oder die Klebstoffzuführvorrichtung anzusteuern. Die Bandführung kann eine Tänzerrolle aufweisen, um die Bandspannung zu regeln.

Weiters kann eine Abstreifvorrichtung vorgesehen sein, um die nach dem Eintauchen des ersten Streifenendes übriggebliebenen Klebstoffreste vom Band zu entfernen. Anschließend kann das Band bspw. auf einem Aufroller aufgewickelt werden.

Die Klebstoffzuführvorrichtung umfasst bevorzugt zumindest ein Dosierventil, welches ausgebildet ist, um Klebstoff auf die Transferfläche aufzubringen. Das Dosierventil ist bevorzugt ausgebildet, um eine Einstellung der jeweils ausgebrachten Klebstoffmenge zu ermöglichen. Dies verbessert die Flexibilität der Vorrichtung, da ein Anpassen der Klebstoffmenge an den jeweils gerade verarbeiteten Streifen möglich ist. Alternativ bzw. zusätzlich kann die Klebstoffzuführvorrichtung bspw. einen Klebstoffbehälter aufweisen, in dem der Klebstoff angeordnet ist. Um den Klebstoff auf die Transferfläche zu befördern, kann die Transferfläche bspw. ausgebildet sein, um in den Klebstoffbehälter bei Bedarf einzutauchen und damit Klebstoff aus dem Klebstoffbehälter zu entnehmen. Weiters ist die Klebstoffzuführvorrichtung bevorzugt ausgebildet, um zwischen einer Warteposition und einer Ausgabeposition bewegt zu werden. Insbesondere kann ein Teil der Klebstoffzuführvorrichtung, bevorzugt translatorisch, zwischen der Warteposition und der Ausgabeposition bewegt werden. Besonders bevorzugt kann zumindest das Dosierventil und/oder ein Klebstoffbehälter zwischen der Warteposition und der Ausgabeposition verlagert werden. In der Ausgabeposition befindet sich die Klebstoffzuführvorrichtung, insbesondere das Dosierventil oder ein Klebstoffbehälter, in einer Position relativ zur Transferfläche, um Klebstoff auf die Transferfläche aufzubringen. Bevorzugt befindet sich das Dosierventil in der Ausgabeposition vertikal oberhalb der Transferfläche. In der Warteposition befindet sich die Klebstoffzuführvorrichtung außerhalb der Ausgabeposition. Diese Anordnung erlaubt es, dass die Klebstoffzuführvorrichtung nach dem Aufbringen des Klebstoffes auf die Transferfläche verlagert werden kann, um Platz für das Zuführen des ersten Endes des länglichen Streifens zu schaffen, sodass einerseits eine kompaktere Vorrichtung bereitgestellt wird und andererseits ein schnelleres Eintauchen des ersten Endes nach dem Aufbringen des Klebstoffes möglich ist. Das Führen der Klebstoffzuführvorrichtung bzw. eines Teils der Klebstoffzuführvorrichtung, insbesondere des Dosierventils, kann bspw. mithilfe eines Verschubzylinders erfolgen. Der Verschubzylinder ist bevorzugt als pneumatischer Zylinder ausgebildet.

Um die beiden Enden des länglichen Streifens nach dem Aufbringen von Klebstoff auf zumindest eines der Enden zusammenzuführen, ist bevorzugt vorgesehen, dass der erste Greifer ausgebildet ist, um das erste Ende des länglichen Streifens nach dem Eintauchen in die Klebstoffmenge in eine Verbindungsposition zu bringen, in der das erste Ende mit einem zweiten Ende des länglichen Streifens verbunden werden kann. Bevorzugt ist vorgesehen, dass die beiden Enden, bevorzugt mithilfe des ersten Greifers, in der Verbindungsposition zusammengepresst werden können. Durch das Zusammenpressen wird die Verbindung zwischen den beiden Enden verbessert.

Weiters ist bevorzugt ein zweiter Greifer vorgesehen, der ausgebildet ist, um ein zweites Ende des länglichen Steifens in eine Verbindungsposition zu bringen, in der das zweite Ende mit dem ersten Ende des länglichen Streifens verbunden werden kann. Der zweite Greifer ist bevorzugt im Wesentlichen gleich aufgebaut wie der erste Greifer. In der Verbindungsposition werden die beiden Enden bevorzugt gegeneinandergepresst und in dieser Position entsprechend der Trocknungszeit des verwendeten Klebers für eine kurze Zeitdauer gehalten, um eine stabile Klebeverbindung zu erzielen. Zur Verlagerung der beiden Enden ist hierbei bevorzugt vorgesehen, dass der zweite Greifer ausgebildet ist, um das zweite Ende des länglichen Streifens zu ergreifen und in die Verbindungsposition zu führen. Diese Ausbildung erlaubt ein flexibles und einfaches Verbringen des zweiten Endes in die Verbindungsposition.

Weiters ist der zweite Greifer bevorzugt ausgebildet, um das zweite Ende in eine Position zu bringen, in der Klebstoff auf das zweite Ende aufgebracht wird. Bevorzugt ist der zweite Greifer ausgebildet, um das zweite Ende, ähnlich wie das erste Ende, in Klebstoff zu tauchen. Dies kann bspw. mithilfe der Klebstoffzuführvorrichtung und der Transferfläche erfolgen oder es kann eine weitere Klebstoffzuführvorrichtung und eine weitere Transferfläche vorgesehen sein, die entsprechend ausgebildet sind. Das Aufbringen von Klebstoff auf beide Enden des Streifens hat bei einigen Materialien Vorteile hinsichtlich der Stabilität der Verbindung.

Der erste Greifer und/oder der zweite Greifer weisen bspw. jeweils zumindest zwei Greifbacken auf, die relativ zueinander bewegt werden können, um einen Abschnitt des Streifens wahlweise zwischen den Greifbacken einzuklemmen und damit zu ergreifen. Weiters sind die Greifer ausgebildet, um jeweils entlang einer entsprechenden Bewegungsbahn geführt zu werden und damit den Streifen zu bewegen.

Um die Klebstoffaufbringung auf das erste Ende des länglichen Streifens weiter zu verbessern, ist bevorzugt vorgesehen, dass auf der der Klebstoffmenge abgewandten Seite der Transferfläche ein Hohlraum angeordnet ist, wobei bevorzugt ein Vakuumelement vorgesehen ist, das ausgebildet ist, um in dem Hohlraum wahlweise einen Unterdruck zu erzeugen. Der Hohlraum ist bspw. als Vertiefung in einer unter der Transferfläche angeordneten Auflage ausgebildet. Die Auflage weist bevorzugt eine im Wesentlichen ebene Oberfläche auf, die im Wesentlichen parallel zur Transferfläche angeordnet ist und bevorzugt im Wesentlichen in einer waagrechten Ebene liegt. Die Transferfläche, insbesondere das Band, liegt bevorzugt auf der der Transferfläche zugewandten Oberfläche der Auflage auf. Die Transferfläche und die Auflage berühren einander hierbei in zumindest einem Bereich. Dies ermöglicht es, dass vor, nach oder während dem Aufbringen der Klebstoffmenge durch die Klebstoffzuführvorrichtung im Hohlraum ein Unterdruck erzeugt werden kann, wodurch die Transferfläche mitsamt der darauf angeordneten Klebstoffmenge leicht in Richtung des Hohlraumes gezogen wird. Während der Unterdruck aufrechterhalten wird, kann das erste Ende des länglichen Streifens in die Klebstoffmenge getaucht werden. Hierbei wird eine bessere Positionierung des Klebstoffes und damit eine noch gleichmäßigere Verteilung des Klebstoffes auf dem Ende des länglichen Streifens bewirkt. Der Hohlraum ist bevorzugt als Vertiefung in der Auflage ausgebildet, die bspw. eine halbkugelförmige oder konische Form aufweist. Weiters kann der Hohlraum bspw. über einen Kanal mit dem Vakuumelement verbunden sein, sodass über den Kanal Luft aus dem Hohlraum entfernt werden kann, um einen Unterdruck im Hohlraum herzustellen.

Weiters ist bevorzugt zumindest eine Kamera vorgesehen, die ausgebildet ist, um das durch die Vorrichtung durchgeführte Verfahren zu überwachen.

Die Vorrichtung weist bevorzugt eine Steuerungsvorrichtung auf, die mit den einzelnen Elementen der Vorrichtung, bspw. dem bzw. den Greifern, der Klebstoffzuführvorrichtung, dem Aufroller, der Bandüberwachung und der Kamera verbunden ist, um die einzelnen Elemente zu steuern bzw. von diesen Daten zu empfangen.

Weiters ist erfindungsgemäß ein Verfahren zur Herstellung eines Ringes aus einem länglichen Streifen vorgesehen, bei welchem in einem ersten Schritt eine Klebstoffmenge mithilfe einer Klebstoffzuführvorrichtung auf eine Transferfläche aufgebracht wird, anschließend in einem zweiten Schritt ein erstes Ende des länglichen Streifens in die Klebstoffmenge zumindest teilweise eingetaucht wird und abschließend in einem dritten Schritt das erste Ende des länglichen Streifens mit einem zweiten Ende des länglichen Streifens verbunden wird.

Das Verfahren wird bevorzugt mehrfach hintereinander durchgeführt, um eine Vielzahl von länglichen Streifen jeweils zu einem Ring zu verbinden. Die länglichen Streifen haben bevorzugt im Wesentlichen über die Länge des Streifens den gleichen Querschnitt. Der Querschnitt ist bspw. rund, oval oder eckig. Der Durchmesser des Streifens beträgt bspw. 5 bis 20 **mm.** Der Streifen kann bspw. aus einem Moosgummi oder einem anderen Dichtmaterial sein.

Während des zweiten Schrittes wird der längliche Streifen zumindest einmal in die Klebstoffmenge eingetaucht. Bevorzugt ist vorgesehen, dass der längliche Streifen während des zweiten Schrittes zweimal, dreimal oder öfter hintereinander in die Klebstoffmenge eingetaucht wird. Hierbei wird der Abstand zwischen dem einzutauchenden Ende des Streifens und der Transferfläche zunächst verringert, sodass das Ende mit dem Klebstoff in Berührung kommt, anschließend wird der Abstand wieder erhöht und dann wieder verringert, sodass das Ende erneut mit dem Klebstoff in Berührung kommt. Dies kann wiederholt werden. Es hat sich überraschend herausgestellt, dass zwei- oder mehrmaliges Eintauchen die Verteilung des Klebstoffes auf dem Ende des Streifens verbessert.

Bevorzugt ist vorgesehen, dass ein bewegbares Band die Transferfläche umfasst und das Band nach dem zweiten Schritt bewegt wird. Das Band wird bevorzugt um ca. 1 bis 5 cm bewegt, sodass bei der erneuten Durchführung des Verfahrens eine Klebstoffmenge auf einen anderen Abschnitt des Bandes, der als Transferfläche dient, aufgebracht wird. Bevorzugt wird das Band während des ersten Schrittes und des zweiten Schrittes nicht bewegt. Die Klebstoffmenge wird hierbei also auf das Band aufgetragen und an der gleichen Stelle wird das Ende des Streifens in die Klebstoffmenge eingetaucht. Alternativ zur Weiterbewegung des Bandes nach jedem zweiten Schritt kann vorgesehen sein, dass das Band nach dem erstmaligen Durchführen des zweiten Schrittes nicht weiterbewegt wird, sondern erst nach dem zweiten Durchführen des zweiten Schrittes. Entsprechend kann jeweils nur bei geraden Wiederholungen des zweiten Schrittes das Band weiterbewegt werden, wobei nur bei ungeraden Wiederholungen der erste Schritt durchgeführt, also Klebstoff aufgebracht, wird. Hierbei wird eine Klebstoffmenge für die Fertigung von zwei Ringen genutzt, indem zwei Streifenenden nacheinander in die gleiche Klebstoffmenge eingetaucht werden.

Zur Verbesserung der Klebstoffaufbringung ist bevorzugt vorgesehen, dass in einem Hohlraum unterhalb der Transferfläche vor, nach oder während des ersten Schrittes ein Unterdruck erzeugt wird. Der Unterdruck wird bevorzugt während des zweiten Schrittes aufrechterhalten und nach dem zweiten Schritt gelöst.

Der Klebstoff zur Verbindung der beiden Enden des länglichen Streifens ist bspw. ein Sofortklebstoff auf Ethyl-2-Cyanacrylat-Basis und wird je nach Material des Streifens ausgewählt.

Auch die jeweilige Menge und Größe der jeweils aufgebrachten Klebstoffmenge auf die Transferfläche sowie die Eintauchtiefe sind vom Material und der Form, insbesondere dem Querschnitt des länglichen Streifens abhängig.

Die abgelängten Streifen können der erfindungsgemäßen Vorrichtung bspw. mithilfe des bzw. der Greifer zugeführt werden. Nach dem Bilden des Ringes kann dieser aus der Vorrichtung transportiert werden. Auch hierzu können bspw. die Greifer oder andere Elemente genutzt werden.

Erfindungsgemäß ist weiters ein Ring vorgesehen, hergestellt durch ein erfindungsgemäßes Verfahren. Der Ring ist bevorzugt ein Dichtungsring.

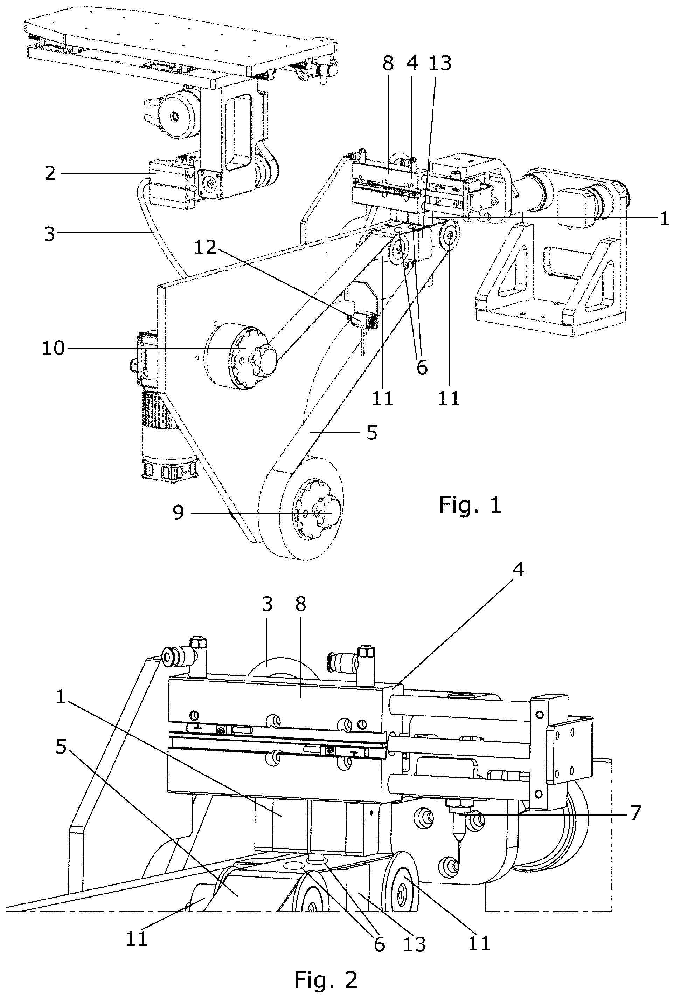

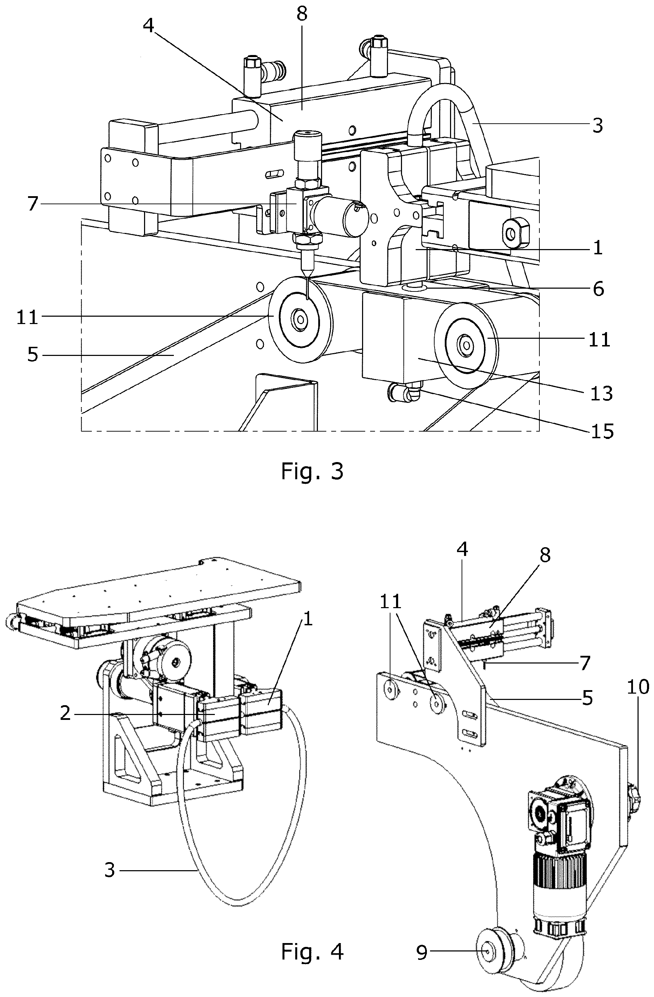

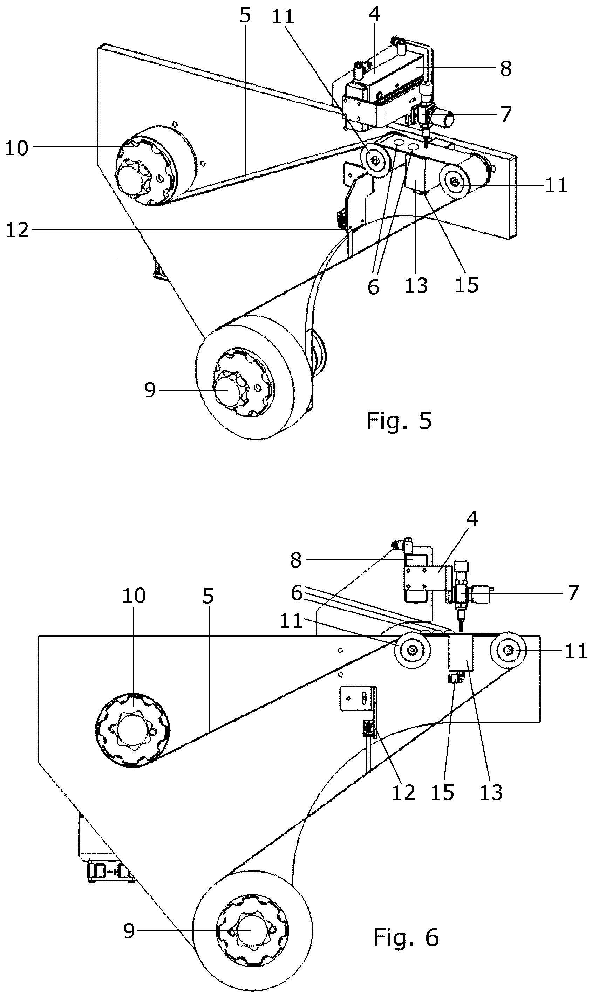

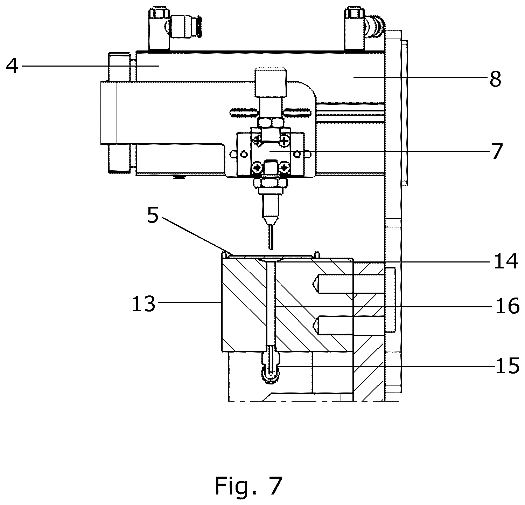

Die Erfindung wird nachfolgend anhand eines in der Zeichnung schematisch dargestellten Ausführungsbeispiels näher erläutert. In dieser zeigt Fig. 1 eine erfindungsgemäße Vorrichtung zur Herstellung eines Ringes in einer perspektivischen Ansicht, Fig. 2 eine erste Detailansicht der Vorrichtung gemäß Fig. 1, Fig. 3 eine zweite Detailansicht der Vorrichtung gemäß Fig. 1, Fig. 4 die Vorrichtung gemäß Fig. 1 in einer weiteren perspektivischen Ansicht, Fig. 5 einen Teil der Vorrichtung gemäß Fig. 1 in einer perspektivischen Ansicht, Fig. 6 den Teil gemäß Fig. 5 in einer Vorderansicht und Fig. 7 eine Schnittansicht eines Details des Teils gemäß Fig. 5.

In Fig. 1 ist eine erfindungsgemäße Vorrichtung während der Durchführung des zweiten Schrittes des erfindungsgemäßen Verfahrens schematisch dargestellt. Die Vorrichtung umfasst einen ersten Greifer 1 und einen zweiten Greifer 2, die jeweils zwei Greifbacken aufweisen. Der erste Greifer 1 ist ausgebildet, um einen ersten Endbereich eines länglichen Streifen 3 zu greifen und der zweite Greifer 2 ist ausgebildet, um einen zweiten Endbereich des länglichen Streifens 3 zu greifen. Hierbei werden die Endbereiche des Streifens 3 jeweils zwischen den Greifbacken der Greifer 1,2 eingeklemmt und damit fixiert. Weiters ist eine Klebstoffzuführvorrichtung 4 sowie ein bewegbares Band 5 vorgesehen, wobei das bewegbare Band 5 eine Transferfläche umfasst bzw. diese bildet. Die Klebstoffzuführvorrichtung 4 ist ausgebildet, um wahlweise eine Klebstoffmenge 6 mithilfe eines Dosierventils 7 (Fig. 2) auf das bewegbare Band 5 aufzubringen. Hierzu umfasst die Klebstoffzuführvorrichtung 4 einen Verschubzylinder 8, der ausgebildet ist, um das Dosierventil 7 wahlweise zwischen einer Warteposition (Fig. 1) und einer Ausgabeposition (Fig. 5) zu bewegen. Das Band 4 wird wahlweise von einem gebremsten Abroller 9 zu einem durch einen Motor angetriebenen Aufroller 10 geführt. Unterhalb der Klebstoffzuführvorrichtung 4 wird das Band 5 mithilfe zweier Umlenkrollen 11 im Wesentlichen waagrecht gehalten, um ein sauberes Aufbringen der Klebstoffmengen 6 zu ermöglichen. Zur Sicherstellung der gewünschten Führung des Bandes 5 ist weiters eine Folienüberwachung 12 angeordnet, um die Anwesenheit des Bandes 4 zu erkennen und den Abroller, den Aufroller sowie die Klebstoffzuführvorrichtung 4 entsprechend ansteuern zu können. Unterhalb der Klebstoffzuführvorrichtung 4 und auf der der Klebstoffzuführvorrichtung 4 abgewandten Seite des Bandes 5 ist eine Auflage 13 angeordnet. Die Auflage 13 weist eine im Wesentlichen waagrechte Oberfläche sowie einen als Vertiefung ausgebildeten Hohlraum 14 (Fig. 7) auf, der mit einem Vakuumelement, bspw. über einen Vakuumanschluss 15 (Fig. 3), verbunden ist.

In der dargestellten Position der Vorrichtung wird der zweite Schritt des Verfahrens durchgeführt. Durch die Klebstoffzuführvorrichtung 4 wurde bereits im ersten Schritt eine Klebstoffmenge 6 auf das die Transferfläche bildende Band 4 aufgebracht. Anschließend wurde die Klebstoffzuführvorrichtung 4 in die dargestellte Warteposition gebracht und das erste Ende des Streifens 3 wird durch den ersten Greifer 1 in eine Klebstoffmenge 6 getaucht. Der zweite Greifer 2 hält unterdessen den zweiten Endbereich des Steifens **3.** Das Eintauchen kann entweder durch eine Bewegung des ersten Greifers 1 in Richtung zur Klebstoffmenge 6 oder durch eine Bewegung der Klebstoffmenge 6 in Richtung des Greifers 1 erfolgen. Auch eine Kombination dieser beiden Bewegungen ist möglich. Weiters ist eine Klebstoffmenge 6 auf dem Band 5 dargestellt, in die bereits ein Ende eines Streifens 3 eingetaucht wurde und die nunmehr in Richtung Aufroller 10 bewegt wird.

In Fig. 2 ist eine erste Detailansicht der Vorrichtung gemäß Fig. 1 dargestellt. Die Klebstoffzuführvorrichtung 4 befindet sich ebenfalls in der Warteposition. In dieser Ansicht ist das Dosierventil 7 gezeigt.

In Fig. 3 ist eine zweite Detailansicht der Vorrichtung gemäß Fig. 1 von der anderen Seite dargestellt. Hierbei ist insbesondere die Anordnung des Dosierventils 7 gezeigt. Der erste Greifer 1 taucht, wie bei den Fig. 1 und 2, gerade das erste Ende in eine Klebstoffmenge 6.

In Fig. 4 ist die Vorrichtung gemäß Fig. 1 in einer weiteren perspektivischen Ansicht dargestellt. Die Vorrichtung befindet sich bei der Durchführung des dritten Schritts des Verfahrens. Das erste Ende wurde bereits in eine Klebstoffmenge 6 eingetaucht und mithilfe des ersten Greifers 1 zum durch den zweiten Greifer 2 gehaltenen zweiten Endbereich in eine dargestellte Verbindungsposition geführt. In der Verbindungsposition wird das erste Ende gegen das zweite Ende des Streifens 3 gedrückt, um das erste Ende mit dem zweiten Ende mithilfe des Klebstoffes zu verbinden und einen geschlossenen Ring zu schaffen.

In Fig. 5 ist ein Teil der Vorrichtung gemäß Fig. 1 in einer perspektivischen Ansicht dargestellt, wobei sich die Klebstoffzuführvorrichtung 4 in der Ausgabeposition befindet. Hierbei ist das Dosierventil 7 derart angeordnet, dass eine Klebstoffmenge 6 auf das Band 5 aufgebracht werden kann. Bspw. befindet sich das Dosierventil 7, wie gezeigt, vertikal oberhalb des Bandes 5.

In Fig. 6 ist der Teil gemäß Fig. 5 in einer Seitenansicht gezeigt.

In Fig. 7 ist eine Schnittdarstellung eines Details des Teils gemäß Fig. 5 gezeigt. Insbesondere ist der als Vertiefung in der Auflage 13 ausgebildete Hohlraum 14 dargestellt, der über einen Kanal 16 mit dem Vakuumanschluss 15 verbunden ist. Im Betrieb kann mithilfe eines an den Vakuumanschluss 15 angeschlossenen Vakuumelements im Hohlraum 14 ein Unterdruck erzeugt werden, der eine Klebstoffmenge 6 leicht in Richtung zum Hohlraum 15 zieht und dadurch die Klebstoffverteilung auf einem eingetauchten Ende eines Streifens 3 verbessert.

## Patentansprüche

1. Vorrichtung zur Herstellung eines Ringes aus einem länglichen Streifen (3), umfassend einen ersten Greifer (1), der ausgebildet ist, um den länglichen Streifen (3) zu ergreifen und zu bewegen, sowie eine Klebstoffzuführvorrichtung (4), **dadurch gekennzeichnet, dass** die Klebstoffzuführvorrichtung (4) ausgebildet ist, um eine Klebstoffmenge (6) auf eine Transferfläche aufzubringen, und der erste Greifer (1) ausgebildet ist, um ein erstes Ende des länglichen Streifens (3) in die Klebstoffmenge (6) zumindest teilweise einzutauchen.

2. Vorrichtung nach Anspruch 1, **dadurch gekennzeichnet, dass** ein bewegbares Band (5) vorgesehen ist, welches die Transferfläche umfasst.

3. Vorrichtung nach Anspruch 1, **dadurch gekennzeichnet, dass** die Transferfläche derart angeordnet ist, dass sie wahlweise bewegt werden kann.

4. Vorrichtung nach Anspruch 1, 2 oder 3, **dadurch gekennzeichnet, dass** ein Teil der Klebstoffzuführvorrichtung (4) ausgebildet ist, um zwischen einer Warteposition und einer Ausgabeposition bewegt zu werden, wobei sich die Klebstoffzuführvorrichtung (4) in der Ausgabeposition in einer Position relativ zur Transferfläche befindet, um Klebstoff auf die Transferfläche aufzubringen und sich in der Warteposition außerhalb der Ausgabeposition befindet.

5. Vorrichtung nach einem der Ansprüche 1 bis 4, **dadurch gekennzeichnet, dass** der erste Greifer (1) ausgebildet ist, um das erste Ende des länglichen Streifens (3) nach dem Eintauchen in die Klebstoffmenge (6) in eine Verbindungsposition zu bringen, in der das erste Ende mit einem zweiten Ende des länglichen Streifens (3) verbunden werden kann.

6. Vorrichtung nach einem der Ansprüche 1 bis **5, dadurch gekennzeichnet, dass** ein zweiter Greifer (2) vorgesehen ist, der ausgebildet ist, um ein zweites Ende des länglichen Steifens (3) in eine Verbindungsposition zu bringen, in der das zweite Ende mit dem ersten Ende des länglichen Streifens (3) verbunden werden kann.

7. Vorrichtung nach einem der Ansprüche 1 bis **6, dadurch gekennzeichnet, dass** auf der der Klebstoffmenge (6) abgewandten Seite der Transferfläche ein Hohlraum (14) angeordnet ist, wobei bevorzugt ein Vakuumelement (15) vorgesehen ist, das ausgebildet ist, um in dem Hohlraum (14) wahlweise einen Unterdruck zu erzeugen.

8. Verfahren zur Herstellung eines Ringes aus einem länglichen Streifen (3), bei welchem in einem ersten Schritt eine Klebstoffmenge (6) mithilfe einer Klebstoffzuführvorrichtung (4) auf eine Transferfläche aufgebracht wird, anschließend in einem zweiten Schritt ein erstes Ende des länglichen Streifens (3) in die Klebstoffmenge (6) zumindest teilweise eingetaucht wird und abschließend in einem dritten Schritt das erste Ende des länglichen Streifens (3) mit einem zweiten Ende des länglichen Streifens (3) verbunden wird.

9. Verfahren nach Anspruch **8, dadurch gekennzeichnet, dass** ein bewegbares Band (5) die Transferfläche umfasst und das Band (5) nach dem zweiten Schritt bewegt wird.

10. Verfahren nach Anspruch 8 oder 9, **dadurch gekennzeichnet, dass** in einem Hohlraum (14) unterhalb der Transferfläche vor, nach oder während des ersten Schrittes ein Unterdruck erzeugt wird.

## Claims

1. Apparatus for manufacturing a ring from an elongated strip (3), comprising a first gripper (1) configured to grasp and move the elongated strip (3), and an adhesive supply device (4), **characterized in that** the adhesive supply device (4) is configured to apply an amount of adhesive (6) to a transfer surface, and the first gripper (1) is configured to at least partially immerse a first end of the elongated strip (3) in the amount of adhesive (6).

2. Apparatus according to claim 1, **characterized in that** a movable belt (5) is provided which comprises the transfer surface.

3. Apparatus according to claim 1, **characterized in that** the transfer surface is arranged such that it can be optionally moved.

4. Apparatus according to claim 1, 2, or 3, **characterized in that** a portion of the adhesive supply device (4) is configured to move between a waiting position and a dispensing position, wherein, in the dispensing position, the adhesive supply device (4) is located relative to the transfer surface in order to apply adhesive to the transfer surface, and in the waiting position, it is located outside the dispensing position.

5. Apparatus according to any one of claims 1 to 4, **characterized in that** the first gripper (1) is configured to bring the first end of the elongated strip (3) into a joining position after immersion in the amount of adhesive (6), in which the first end can be joined to a second end of the elongated strip (3).

6. Apparatus according to any one of claims 1 to 5, **characterized in that** a second gripper (2) is provided, which is configured to bring a second end of the elongated strip (3) into a joining position in which the second end can be joined to the first end of the elongated strip (3).

7. Apparatus according to any one of claims 1 to 6, **characterized in that** a cavity (14) is arranged on the side of the transfer surface facing away from the amount of adhesive (6), preferably a vacuum element (15) being provided, which is configured to selectively generate a vacuum in the cavity (14).

8. Method for manufacturing a ring from an elongated strip (3), in which, in a first step, an amount of adhesive (6) is applied to a transfer surface using an adhesive supply device (4), then, in a second step, a first end of the elongated strip (3) is at least partially immersed in the amount of adhesive (6), and finally, in a third step, the first end of the elongated strip (3) is joined to a second end of the elongated strip (3).

9. Method according to claim 8, **characterized in that** a movable belt (5) comprises the transfer surface and the belt (5) is moved after the second step.

10. Method according to claim 8 or 9, **characterized in that** a vacuum is created in a cavity (14) below the transfer surface before, after, or during the first step.

## Revendications

1. Dispositif, destiné à fabriquer une bague à partir d'une lanière (3) allongée, comprenant un premier grappin (1), qui est conçu pour saisir et déplacer la lanière (3) allongée, ainsi qu'un dispositif d'alimentation (4) d'agent adhésif, **caractérisé en ce que** le dispositif d'alimentation (4) d'agent adhésif est conçu pour appliquer une quantité d'agent adhésif (6) sur une surface de transfert et le premier grappin (1) est conçu pour plonger au moins en partie une première extrémité de la lanière (3) allongée dans la quantité d'agent adhésif (6).

2. Dispositif selon la revendication 1, **caractérisé en ce qu'**il est prévu une bande (5), laquelle comprend la surface de transfert.

3. Dispositif selon la revendication 1, **caractérisé en ce que** la surface de transfert est placée de sorte à pouvoir être déplacée sélectivement.

4. Dispositif selon la revendication 1, 2 ou 3, **caractérisé en ce qu'**une partie du dispositif d'alimentation (4) d'agent adhésif est conçue pour être déplacée entre une position d'attente et une position de distribution, dans la position de distribution, le dispositif d'alimentation (4) d'agent adhésif se trouvant dans une position par rapport à la surface de transfert pour appliquer de l'agent adhésif sur la surface de transfert et dans la position d'attente, se trouvant hors de la position de distribution.

5. Dispositif selon l'une quelconque des revendications 1 à 4, **caractérisé en ce que** le premier grappin (1) est conçu pour, après l'avoir plongée dans la quantité d'agent adhésif (6), amener la première extrémité de la lanière (3) allongée dans la position d'assemblage, dans laquelle la première extrémité peut être assemblée avec une deuxième extrémité de la lanière (3) allongée.

6. Dispositif selon l'une quelconque des revendications 1 à 5, **caractérisé en ce qu'**il est prévu un deuxième grappin (2) qui est conçu pour amener une deuxième extrémité de la lanière (3) allongée dans une position d'assemblage, dans laquelle la deuxième extrémité peut être assemblée avec la première extrémité de la lanière (3) allongée.

7. Dispositif selon l'une quelconque des revendications 1 à 6, **caractérisé en ce que** sur le côté de la surface de transfert qui est opposé à la quantité d'agent adhésif (6) est placée une cavité (14), de préférence un élément à vide (15) étant prévu, qui est conçu pour générer sélectivement une dépression dans la cavité (14).

8. Procédé, destiné à fabriquer une bague à partir d'un lanière (3) allongée, lors duquel dans une première étape, l'on applique à l'aide d'un dispositif d'alimentation (4) d'agent adhésif une quantité d'agent adhésif (6) sur une surface de transfert, par la suite, dans une deuxième étape, l'on plonge au moins en partie une première extrémité de la lanière (3) allongée dans la quantité d'agent adhésif (6) et pour finir, dans une troisième étape, l'on assemble la première extrémité de la lanière (3) allongée avec une deuxième extrémité de la lanière (3) allongée.

9. Procédé selon la revendication 8, **caractérisé en ce qu'**une bande (5) déplaçable comprend la surface de transfert et **en ce que** l'on déplace la bande (5) après la deuxième étape.

10. Procédé selon la revendication 8 ou 9, **caractérisé en ce que** dans une cavité (14) en-dessous de la surface de transfert, l'on génère une dépression avant, après ou pendant la première étape.
